**Europäisches Patentamt**

**European Patent Office**

**Office européen des brevets**

(19)

(11) Veröffentlichungsnummer : **0 239 984**
**B1**

(12) **EUROPÄISCHE PATENTSCHRIFT**

(45) Veröffentlichungstag der Patentschrift :
26.04.89

(51) Int. Cl.⁴ : **F 16 C 1/26**

(21) Anmeldenummer : **87104725.4**

(22) Anmeldetag : **31.03.87**

(54) **Befestigungs-Anordnung für ein Ende eines Bowden-Seilzuges, insbesondere für Seilzug-Betätigungen in Kraftfahrzeugen.**

(30) Priorität : **04.04.86 DE 3611357**

(43) Veröffentlichungstag der Anmeldung :
**07.10.87 Patentblatt 87/41**

(45) Bekanntmachung des Hinweises auf die Patenterteilung : **26.04.89 Patentblatt 89/17**

(84) Benannte Vertragsstaaten :
**DE ES FR GB IT SE**

(56) Entgegenhaltungen :
**EP–A– 0 183 949**
**FR–A– 1 377 924**
**FR–A– 2 554 882**
**US–A– 4 011 770**
**PATENT ABSTRACTS OF JAPAN, Band 8, Nr. 132 (M-303)[1569], 20. Juni 1984; & JP-A-59 34 017 (NISSAN JIDOSHA K.K.) 24-02-1984**

(73) Patentinhaber : **BAYERISCHE MOTOREN WERKE Aktiengesellschaft**
**Postfach 40 02 40 Petuelring 130 - AJ-36**
**D-8000 München 40 (DE)**

(72) Erfinder : **Zirngibl, Georg**
**Hachelstuhlerstrasse 2**
**D-8311 Zweikirchen (DE)**

(74) Vertreter : **Bücken, Helmut**
**Bayerische Motoren Werke Aktiengesellschaft Postfach 40 02 40 Petuelring 130 - AJ-30**
**D-8000 München 40 (DE)**

## Beschreibung

Die Erfindung bezieht sich auf eine Befestigungs-Anordnung für ein Ende eines Bowden-Seilzuges mit einer Bauart gemäß den Oberbegriffs-Merkmalen des Patentanspruches 1. Bei der bekannten Befestigungs-Anordnung dieser Bauart nach DE-U-83 32 864 und FR-A-25 54 882 ist die Schlitzbreite der Aufnahmeöffnung des Aufnahmeteiles geringer als der Durchmesser des Haltenippels. Die Aufnahmeöffnung des Aufnahmeteiles weist in ihrer Längserstreckung Abschnitte mit unterschiedlichem Durchmesser auf, die mit einem konischen Abschnitt verbunden sind. Der Haltenippel ist an einer Stirnseite mit einem abgeschrägten Randflansch versehen, der unter Aufweiten des engeren Abschnitts des Aufnahmeteiles in Achsrichtung des Seilzuges in das Aufnahmeteil einführbar ist, sodaß dieser und ein weiterer Randflansch des Haltenippels eine axiale Verrastung des Haltenippels zwischen den beiden Stirnflächen des Halteteiles ergeben. Da diese aus Kunststoff bestehenden Bauteile sehr geringe Abmessungen aufweisen, ist deren Handhabung beim Zusammenbau und insbesondere bei einer Demontage erschwert bzw. erfordert das Verwenden geeigneter Werkzeuge.

Aus der JP-A-59-34017 ist eine Befestigungsanordnung für einen bandartigen Seilzug bekannt. Diese besteht aus einem das Band umschließenden Haltenippel, der in einer senkrechten Richtung zur Bandlängsrichtung eine Umfangsprofilierung aufweist. Diese Umfangsprofilierung greift in ein Aufnahmeteil ein. Das Aufnahmeteil besteht hierzu aus zwei in Abstand der Dicke des Haltenippels angeordneten Stützkörpern.

Der Nachteil dieser Befestigungsanordnung besteht darin, daß keine Verriegelung des Haltenippels in einer zur Längsachse des Bandes senkrechten Richtung möglich ist. Dies liegt daran, daß keine Verrastung zwischen Haltenippel und Aufnahmeteil vorgesehen ist. Es können vielmehr nur Kräfte in Bandlängsrichtung aufgenommen werden.

Die US-A-4,011,770 beschreibt eine Befestigungsanordnung für das Ende einer Hülle eines Bowden-Seilzuges. Hierbei weist der Haltenippel eine in seine Längsachse verlaufende Bohrung auf. Durch diese Bohrung muß der Seilzug komplett und das Hüllenende des Bowden-Seilzuges teilweise durchgeschoben werden. Für das Hüllenende des Bowden-Seilzuges ist in der Bohrung ein Anschlag vorgesehen. Zum Befestigen weist der Haltenippel eine U-förmige Verlängerung mit zwei Rastnasen auf. Mit dieser Verlängerung wird der Haltenippel durch eine Bohrung in einer Wand gesteckt und aufgrund der Rastnasen verriegelt.

Nachteilig bei dieser Anordnung ist es, daß der Seilzug auf der einen Seite der Wand und die Rastnasen auf der anderen Seite der Wand sich befinden. Dies behindert je nach Größe der Wand eine Demontage des Seilzuges ganz erheblich. Weiter erschwert wird eine Demontage des Haltenippels dadurch, daß die Rastnasen an einem einzigen Teil vorgesehen sind, so daß bei einer Demontage des Haltenippels direkt auf die Rastnasen eine im Sinne eines Zusammendrückens wirkende Kraft eingeleitet werden muß. Da die Rastnasen aber sehr nahe an der den Haltenippel haltenden Wand befestigt sind, ist dies nur mit einem Werkzeug, beispielsweise einer Zange durchführbar. Hierzu muß aber ein gewisser Raumbedarf zur Verfügung stehen.

Aufgabe der Erfindung ist es, die Befestigungsanordnung der bekannten Bauart so weiterzubilden, daß das Ein- und Ausrasten des Haltenippels im Aufnahmeteil in einfacher Weise ohne besondere Werkzeuge von Hand erfolgen kann. Diese Aufgabe löst die Erfindung mit den kennzeichnenden Merkmalen des Patentanspruches 1. Durch diese Ausbildung kann der Haltenippel mit zwei Fingern an den Rastfahnen gehalten und in einfachster Weise zusammen mit dem Seilzugende unmittelbar radial in die Aufnahmeöffnung des Aufnahmeteiles eingeführt und darin durch das elastisch selbsttätige Aufspreizen der Rastfahnen und Eingreifen der Rastnasen in die Rastaussparungen in axialer und radialer Richtung festgelegt werden. Auch das Lösen des Haltenippels ist in gleich einfacher Weise durch Zusammendrücken der Rastfahnen und radiales Herausnehmen des Haltenippels mit dem Seilzugende aus dem Aufnahmeteil möglich.

Die Merkmale der Patentansprüche 2 bis 5 beinhalten Weiterbildungen der Erfindung. Durch Anspruch 2 ist die Griffigkeit der Rastfahnen verbessert. Durch Anspruch 3 ergibt sich eine besonders materialsparende Ausbildung des Aufnahmeteiles und des Haltenippels, da die Randflansche einerseits eine Versteifung des Aufnahmeteiles und andererseits eine verringerte Wandstärke desselben ergeben sowie eine geringe Breite der Rastfahnen des Haltenippels ermöglichen. Eine weitere Verringerung des Materialbedarfs für das Aufnahmeteil ergibt sich durch die Merkmale des Anspruches 4, die darüberhinaus eine einfache Gestaltung und Maßabstimmung der ineinandergreifenden Bauteil-Abschnitte begünstigen.

Die Merkmale des Anspruches 5 beinhalten eine alternative Ausbildung des Aufnahmeteiles und des Haltenippels, die die Herstellung des Aufnahmeteiles durch Ablängen eines Strangpreßprofiles ermöglichen.

in der Zeichnung ist die Erfindung anhand zweier Ausführungsbeispiele dargestellt. Es zeigen :

Fig. 1 eine Befestigungs-Anordnung für das Hüllen-Ende eines Bowden-Seilzuges im Längsschnitt,

Fig. 2 einen Querschnitt der Anordnung nach Fig. 1 gemäß der Linie II-II in Fig. 1,

Fig. 3 eine abgewandelte Ausbildung der Befestigungs-Anordnung gemäß Fig. 1 und

Fig. 4 den Querschnitt der Anordnung nach Fig.

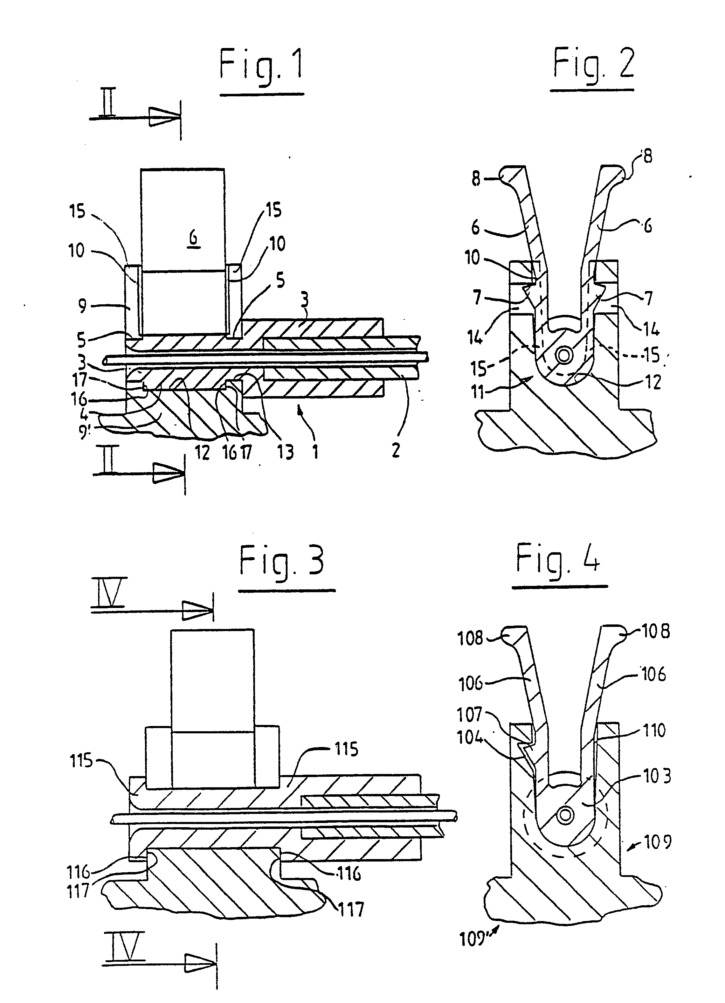

3 gemäß der Linie IV-IV in Fig. 3.

Eine Befestigungs-Anordnung für ein Ende eines Bowden-Seilzuges 1 einer Selzug-Betätigung für ein nicht dargestelltes Stellelement in einem Kraftfahrzeug besteht zu einem Teil aus einem der Kunststoff-Bowdenzug-Hülle 2 durch Kunststoff-Anspritzen einstückig angeformten Haltenippel 3 mit zylindrischer Grundform. Dabei geht der Außendurchmesser der Bowdenzug-Hülle 2 im Bereich des Haltenippels 3 in einen Abschnitt 4 mit größerem Außendurchmesser uber und endet in einem weiteren kurzen Abschnitt 5, der in seinem Außendurchmesser mit demjenigen der Bowdenzug-Hülle 2 übereinstimmt. Der Abschnitt 4 bildet damit den eigentlichen Haltenippel 3 und ist mit zwei einstückig angeformten Rastfahnen 6 versehen, die etwa radial und parallel zu einander vom zylindrischen Teilbereich des Haltenippels 3 wegragen. Diese Rastfahnen 6 sind auf den voneinander abgewandten Außenseiten mit je einer rippenförmigen Rastnase 7 und ebenfalls rippenförmigen gerundeten Greifnase 8 versehen. Der Haltenippel 3 stützt sich formflüssig innerhalb eines Aufnahmeteiles 9 als zweites Teil der Befestigungsanordnung ab, das zum Einführen des Haltenippels 3 eine radiale schlitzförmig offene Aufnahmeöffnung 10 und zur zentrierten Lagesicherung des Haltenippels 3 einen halbzylindrischen Bodenbereich 11 aufweist, der in Anpassung an die unterschiedlich zylindrischen Abschnitte 4 und 5 der Bowdenzug-Hülle 2 entsprechende unterschiedliche Teilbereiche 12 und 13 aufweist. Die innenwände der Aufnahmeöffnung 10 sind mit als Durchgangöffnungen ausgebildeten Rastaussparungen 14 für den Eingriff der Rastnasen 7 der Rastfahnen 6 versehen. An den beiden Stirnbereichen der Aufnahmeöffnung 10 sind dem Aufnahmeteil 9 an beiden U-förmigen innenrändern innen vorstehende Randflansche 15 angeformt, die an ihren einander zugewandten Innenseiten die Abstützflächen 16 für die entsprechenden Gegen-Abstützflächen 17 an den Stirnseiten des mit größerem Durchmesser ausgebildeten Abschnittes 4 des Haltenippels 3 bilden.

Das Aufnahmeteil 9 ist Bestandteil eines feststehenden Gehäuseteiles 9', wie beispielsweise eines Heizgerätegehäuses. Das Aufnahmeteil 9 kann jedoch auch an einem verstellbaren Bauteil oder Verstellhebel einstückig angeformt sowie beweglich oder starr befestigt sein.

Das Hüllen-Ende 2 des Bowden-Seilzuges 1 läßt sich mittels der Rastfahnen 6 und deren Greifnasen 8 in besonders günstiger Weise mit zwei Fingern in das Aufnahmeteil 9 einführen, wobei die Rastnasen 7 in die Rastaussparungen 14 einrasten und die Befestigung sichern. Zum Lösen der Befestigung lassen sich in gleich einfacher Weise durch Zusammendrücken der Rastfahnen 6 bzw. deren Greifnasen 8 die Rastnasen 7 entriegeln und der Haltenippel 3 mit dem Hüllen-Ende 2 aus dem Aufnahmeteil 9 entnehmen.

Die Ausbildung nach den Figuren 3 und 4 weicht lediglich in ihrem Detailaufbau von derjenigen nach den Figuren 1 und 2 ab. Dabei ist das Halteteil 109 hinterschnitungsfrei so ausgebildet, daß es durch Ablängen eines Kunststoff-Profiles herstellbar ist und an einem beliebigen Bauteil 109' fest oder beweglich beispielsweise durch Schweißen befestigt werden kann. Zu diesem Zweck ist die Aufnahmeöffnung 110 und die Rastaussparung 114 des Aufnahmeteiles ausschließlich parallel zur Achse der zylindrischen Grundform des Haltenippels 103 geformt. Dem Haltenippel 103 sind beiderseits der Stirnflächen des Aufnahmeteils 109 je ein Radialflansch 115 angeformt, die mit den als Abstützflächen 116 wirkenden Stirnseiten mittels ihren einander zugewandten Bundflächen als Gegen-Abstützflächen 117 zusammenwirken. Zwischen den Radialfianschen 115 sind dem Haltenippel 103 Rastfahnen 106 mit insgesamt nur einer Rastnase 107 und je einer Greifnase 108 angeformt.

Die Handhabung der Befestigungs-Anordnung nach den Figuren 3 und 4 stimmt mit derjenigen nach den Figuren 1 und 2 vollständig überein.

## Patentansprüche

1. Befestigungs-Anordnung für ein Ende eines Bowden-Selizuges, insbesondere für Seilzug-Betätigungen in Kraftfahrzeugen,

mit einem in seiner Grundform zylindrischen Haltenippel (3), der am Hüllen-Ende des Bowden-Seilzuges (1) befestigt ist, und

mit einem Aufnahmeteil (9) zum Abstützen des Seilzuges (1) an einem Fest- oder Verstell-Bauteil (9'),

wobei das Aufnahmeteil (9) eine zur Achse des Seilzuges (1) radiale schlitzförmig offene Aufnahmeöffnung (10) für den Haltenippel (3) sowie an beiden Stirnseiten je eine quer zur Achse des Seilzuges (1) angeordnete Abstützfläche (16) für Gegen-Abstützflächen (17) des Haltenippels (3) aufweist und

wobei der Haltenippel (3) im Aufnahmeteil (9) durch elastisches ineinandergreifen radial und axial festgelegt ist,

dadurch gekennzeichnet,

daß die Schlitzbreite der Aufnahmeöffnung (10) des Aufnahmeteiles (9) dem Durchmesser des Haltenippels (3) entspricht und daß der Haltenippel (3) zwei etwa parallel zu den Innenwänden der Aufnahmeöffnung (10) im Aufnahmeteil (9) angeordnete elastische Rastfahnen (6) aufweist,

die insgesamt mit einer oder mit je einer in eine bzw. je eine Rastaussparung (14) in den innenwänden der Aufnahmeöffnung (10) einrastenden Rastnase (n) (7) versehen sind und

die mit Betätigungsenden (Greifnasen 8) über die Begrenzung des Aufnahmeteiles (9) hinausragen und zum Ein- und Ausrasten der Rastnase (n) (7) elastisch aufeinanderzu bewegbar sind.

2. Anordnung nach Anspruch 1, dadurch gekennzeichnet, daß die Rastfahnen (6) an ihren freien Enden je eine voneinander abgewandte Creifnase (8) aufweisen.

3. Anordnung nach Anspruch 1, dadurch gekennzeichnet, daß die Aufnahmeöffnung (10) an beiden Stirnbereichen je einen an beiden U-för-

migen Innenrändern innen vorstehenden Rand-flansch (15) mit Abstützflächen (16) für den Haltenippel (3) aufweist,

deren Innenabstand dem Abstand der Gegen-Abstützflachen (17) des Haltenippels (3) und der Breite der Rastfahnen (6) entspricht.

4. Anordnung nach Anspruch 3, dadurch gekennzeichnet, daß die Rastaussparung (en) (14) in der Innenwand bzw. in den Innenwänden der Aufnahmeöffnung (10) als Durchgangsöffnungen mit dem ·Innenabstand der Randflansche (15) entsprechender Breite und die Rastnasen (7) mit der Breite der Rastfahnen (6) ausgebildet sind.

5. Anordnung nach Anspruch 1, dadurch gekennzeichnet,

daß die Aufnahmeöffnung (110) einschließlich Rastaussparung (114) ausschließlich achsparallel zum Seilzug (1) geformt ist, daß der Haltenippel (103) beiderseits der als Abstützflächen (116) wirksamen Außen-Stirnflächen des Aufnahmetei-les (109) je einen Radialflansch (115) mit je einer Gegen-Abstützfläche (117) aufweist und

daß die Rastfahnen (106) und Rastnase (n) (107) zwischen den Radialflanschen (115) dem Haltenippel (103) angeformt sind.

**Claims**

1. A fastening arrangement for one end of a Bowden cable, especially for cable actuation systems in motor vehicles, having a retaining nipple (3) of cylindrical basic rom which is secured to the sheath end of the Bowden cable (1), and having a reception part (9) for supporting the cable (1) on a fixed or adjustable component (9'), the reception part (9) having a reception opening (10) open in slot form and radial to the axis of the cable (1) for the retaining nipple (3) and at each end a support face (16) arranged transversely of the axis of the cable (1) for counter-support faces (17) of the retaining nipple (3) and the retaining nipple (3) being radially and axially made fast in the reception part (9) by elastic interengagement, characterised in that the slot width of the reception opening (10) of the reception part (9) corresponds to the diameter of the retaining nipple (3) and that the retaining nipple (3) comprises two elastic catch tags (6) arranged approximately parallel to the inner walls of the reception opening (10) in the reception part (9) which are provided as a whole with a catch nose (7), or each with a catch nose (7), which snaps into a catch aperture (14), or snap each into a catch aperture (14) in the inner walls of the reception opening (10), and which protrude with actuation ends (grasping noses 8) beyond the limitation of the reception part (9) and are movable elastically towards one another for the engagement and disengagement of the catch nose (s) (7).

2. An arrangement according to Claim 1, characterised in that the catch tags (6) each have a grasping nose (8), which grasping noses are turned away from one another, at their free ends.

3. An arrangement according to Claim 1, characterised in that the reception opening (10) comprises an inwardly protruding edge flange (15), on each of the two U-shaped inner edges, with support faces (16) for the retaining nipple (3), the internal spacing of which corresponds to the spacing of the counter-support faces (17) of the retaining nipple (3) and the width of the catch tags (6).

4. An arrangement according to Claim 3, characterised in that the catch apertures (14) are formed in the inner wall or walls of the reception opening (10) as through-passing openingswith a width corresponding to the internal interval of the edge flanges (15) and the catch noses (7) are formed with the width of the catch tags (6).

5. An arrangement according to Claim 1, characterised in that the reception opening (110) including the catch aperture (114) is shaped exclusively axially parallel with the draw cable (1), that the retaining nipple (103) comprises a radial flange (115) with a counter-support face (117) on each of the two sides of the outer end faces, acting as support faces (116), of the reception part (109), and that the catch tags (106) and catch nose (s) (107) are formed on the retaining nipple (103) between the radial flanges (115).

**Revendications**

1. Dispositif de fixation pour une extrémité d'un câble de commande sous gaine, notamment pour des commandes par câbles dans des véhicules automobiles, avec un raccord de maintien (3) de forme de base cylindrique qui est fixé à l'extrémité de la gaine du câble de commande sous gaine (1) et avec une pièce réceptrice (9) pour supporter le câble de commande sous gaine (1) sur une partie constitutive (9') fixe ou réglable, la pièce réceptrice (9) comportant pour le raccord de maintien (3) une ouverture réceptrice (10) ouverte en forme de fente radiale, par rapport à l'axe du câble de commande sous gaine (1), et la pièce réceptrice (9) comportant également à chacun de ces deux côtés frontaux une surface d'appui (16) disposée transversalement par rapport à l'axe du câble de commande sous gaine (1) pour des surfaces d'appui antagonistes (17) du raccord de maintien (3), ce raccord de maintien (3) étant fixé radialement et axialement dans la pièce réceptrice (9) par encliquetage élastique, dispositif de fixation caractérisé en ce que la largeur de la fente de l'ouverture réceptrice (10) de la pièce réceptrice (9) correspond au diamètre du raccord de maintien (3) et que ce raccord de maintien (3) comporte deux palettes d'encliquetage élastiques (6) disposées à peu près parallèlement aux parois internes de l'ouverture réceptrice (10) dans la pièce réceptrice (9), l'une de ces palettes ou bien chacune d'elles étant munie d'un bec d'encliquetage (7) s'encliquetant dans un évidement d'encliquetage (14) sur l'une ou sur chacune des parois de l'ouverture réceptrice (10), et ces palettes d'encliquetage (6) faisant saillie au-dessus de la limite de la pièce réceptrice (9) par des extrémités de manoeuvre (talons de prise 8), et étant susceptibles d'être déplacées élastiquement l'une par rapport à l'autre pour l'encliquetage et le désencliquetage des becs d'encliquetage (7).

2. Dispositif selon la revendication 1, caractérisé en ce que les palettes d'encliquetage (6) comportent chacune à leur extrémité libre un talon de prise (8), ces talons étant opposés l'un à l'autre.

3. Dispositif selon la revendication 1, caractérisé en ce que l'ouverture réceptrice (10) comporte à chacune de ces deux zones frontales, une bride de bordure (15) faisant saillie à l'intérieur sur les bords internes en forme de U et comportant des surfaces d'appui (16) pour le raccord de maintien (3), la distance interne de ces brides de bordure (15) correspondant à la distance des surfaces d'appui antagonistes (17) du raccord de maintien (3) et à la largeur des palettes d'encliquetage (6).

4. Dispositif selon la revendication 3, caractérisé en ce que les évidements d'encliquetage (14) dans la paroi interne ou bien dans les parois internes de l'ouverture réceptrice (10) sont réalisés sous la forme d'orifices traversants avec une largeur correspondant à la distance interne des brides de bordure (15), tandis que les becs d'encliquetage (7) sont réalisés à la largeur des palettes d'encliquetage (6).

5. Dispositif selon la revendication 1, caractérisé en ce que l'ouverture réceptrice (110) y compris l'évidement d'encliquetage (114) est conformée de façon exclusivement parallèle à l'axe du câble de commande sous gaine (1), tandis que le raccord de maintien (103) comporte respectivement des deux côtés, des faces frontales externes, jouant le rôle de surfaces d'appui (116), de la pièce réceptrice (109), une bride radiale (115) avec une surface d'appui antagoniste (117), cependant que les palettes d'encliquetage (106) et les nez d'encliquetage (107) sont façonnés sur le raccord de maintien (103) entre les brides radiales (115).

# Fig. 1

# Fig. 2

# Fig. 3

# Fig. 4